# EUROPEAN PATENT APPLICATION

(11) **EP 4 571 858 A1**
(43) Date of publication of application: **18.06.2025**
(21) Application number: 23215727.1
(22) Date of filing: 12.12.2023
(51) Int. Cl.: H01M 4/04, H01M 4/139, H01M 10/0525

(54) **METHOD OF PRODUCING AN ELECTRODE FOIL FOR AN ENERGY STORAGE DEVICE**

(71) Applicant: Customcells Holding GmbH, 25524 Itzehoe (DE)
(72) Inventor: Werlich, Daniela, Itzehoe (DE)
(74) Representative: LKGLOBAL Lorenz & Kopf Patentanwalt Attorney at Law PartG mbB

(57) **Abstract**

The present disclosure relates to a method of producing an electrode foil for an energy storage device. The method comprises providing the electrode foil comprising a metal foil and a coating including an active material. The method further comprises inspecting the electrode foil for imperfections of the coating, and upon identifying an imperfection, applying an electrode slurry onto the electrode foil at the identified imperfection.

## Description

### FIELD OF THE DISCLOSURE

The present disclosure relates to a method of producing an electrode foil for an energy storage device.

### BACKGROUND

Batteries play a critical role in modern society, powering a wide range of devices from portable electronics to electric vehicles. Rechargeable batteries, also referred to as secondary batteries, are often preferred due to their reusability.

The increasing demand for portable electronics and electric vehicles has led to a growing need for batteries with higher energy density, longer lifespan (including number of possible charging cycles of a secondary battery), and improved safety. Furthermore, the shift towards renewable energy sources such as solar and wind power has increased the need for energy storage systems, making batteries an essential technology in the transition to a low-carbon economy.

Due to the importance of batteries, there is a high demand to improve the efficiency and lifespan of batteries, including the battery electrodes (i.e., the anode or the cathode). Battery electrodes are conductive materials that serve as the positive and negative terminals in a battery.

During manufacturing of an electrode foil, electrode imperfections may arise, e.g. due to imperfections in the manufacturing process, e.g. due to gas or air bubbles in a coating system of the electrode foil and/or in a coating slurry of the electrode foil. Gas/air bubbles may lead to portions of the electrode foil not having a coating. Also, agglomerates of solid material of a coating slurry of the electrode foil may be caught in a manufacturing apparatus and may cause stripe-like imperfections.

Conventionally, electrode foils/sheets of electrode foils exhibiting imperfections need to be sorted out, which is costly and which reduces the electrode foil throughput.

### SUMMARY OF THE DISCLOSURE

Currently, it remains desirable to provide a method of producing an electrode foil that is more reliable.

Therefore, the present disclosure relates to a method of producing an electrode foil for an energy storage device. The method comprises providing the electrode foil comprising a metal foil and a coating including an active material. The method further comprises inspecting the electrode foil for imperfections of the coating, and upon identifying an imperfection, applying an electrode slurry onto the electrode foil at the identified imperfection.

The present method may allow to reduce the percentage of faulty electrode foils. The present method may allow to produce electrode foils having a quality and/or a lower likelihood of comprising imperfections.

The present application may allow a more efficient production of electrode foils, as the rate of electrode foils that have to be rejected due to imperfections can be reduced. Accordingly, the production yield can be increased.

The present method may also be/may be understood as a method of repairing an electrode foil.

The electrode foil e.g. may be a current collector electrode foil.

The energy storage device e.g. may be a battery or a capacitor.

The coating of the electrode foil may have a thickness of e.g. 30 µm or more. The coating of the electrode foil may have a thickness of e.g. 100 µm or less.

Inspecting the electrode foil for imperfections may comprise identifying/detecting an imperfection. The terms identifying an imperfection/detecting an imperfection may be used synonymously, unless stated otherwise. Identifying an imperfection may comprise identifying that an imperfection is present. Identifying an imperfection may comprise identifying a position of the imperfection.

Applying the electrode slurry onto the electrode foil may comprise spray coating. Applying the electrode slurry onto the electrode foil may comprise printing the electrode slurry onto the electrode foil. Applying the electrode slurry onto the electrode foil may comprise stripping the electrode slurry onto the electrode foil. The electrode slurry may be applied by means of a nozzle.

Applying the electrode slurry onto the electrode foil may be performed by incrementally applying the electrode slurry, e.g. by applying a plurality of small amounts/volumes of electrode slurry. This may allow to apply the electrode slurry more flexibly and/or more precisely.

Applying the electrode slurry onto the electrode foil at the identified imperfection may comprise overfilling the imperfection. This may be advantageous, as during drying, a solvent of the electrode slurry may disappear from the electrode slurry, and the electrode slurry may shrink as a consequence.

The electrode slurry may contain a predefined proportion, e.g. 80% or more, of solid material. The electrode slurry may contain a higher proportion of solid material as compared to a coating slurry of the coating of the electrode foil. E.g., the fact that only a small amount of electrode slurry is applied at the imperfection/the fact that only a small area needs to be covered by the electrode slurry may allow a higher percentage of solid material in the electrode slurry as compared to the coating slurry.

This may reduce the amount of drying, which may be required after applying the electrode slurry.

The coating slurry may be the slurry used for providing the coating of the electrode foil/used for the coating of the electrode foil/used during coating the metal foil.

The binder of the electrode slurry may be identical to the binder of the coating slurry.

Applying the electrode slurry may involve smoothing, e.g. with a doctor blade. Applying the electrode slurry may involve sucking remaining electrode slurry in, e.g. slurry remaining after smoothing. This may allow to apply an appropriate amount of electrode slurry without determining the amount required.

The method may comprise moving the electrode foil, e.g. along an application unit that may be configured to apply the amount of electrode slurry. The method may comprise adjusting a moving speed of the electrode foil along the application unit, e.g. based on the imperfection/based on properties of the imperfection. The method may comprise moving the application head above the electrode foil, e.g. in/opposite to a moving direction of the electrode foil and/or orthogonal to the moving direction. The method may comprise adjusting a moving speed of the electrode foil, e.g. when applying the electrode slurry. The method may comprise stopping a movement of the electrode foil, e.g. when applying the electrode slurry.

The method may comprise, e.g. after inspecting the electrode foil for imperfections of the coating, winding the electrode foil onto a coil, and e.g. unwinding the electrode foil subsequently. Inspecting the electrode foil may comprise identifying a position of the imperfection, and e.g. storing the position of the imperfection. This may allow to apply the electrode slurry at the imperfection after unwinding the electrode foil, e.g. without an inspection after unwinding. E.g., when a position of the imperfection is stored, it is possible to move an application unit directly to the imperfection, even if the electrode foil was wound and unwound in between. Also a size/form/shape/volume of an imperfection may be identified/determined and stored.

The electrode slurry may comprise the active material. The electrode slurry optionally further comprises at least one of a binding material, a conducting material, and a solvent.

The electrode slurry may comprise materials of the coating, e.g. all materials of the coating. The electrode slurry may have the same composition as the coating slurry. The materials of the electrode slurry may correspond to the materials of the coating, e.g. except from solvents that may be removed during drying of the coating. The materials of the electrode slurry may correspond to the materials of the coating, e.g. without an exception.

Providing the electrode foil may comprise providing the metal foil and coating the metal foil by applying a coating slurry onto the metal foil. Optionally, the coating slurry may be the electrode slurry.

E.g., the electrode slurry may be applied directly after coating the metal foil by applying the coating slurry, e.g. before a first drying step of the electrode foil/of its coating, when the coating still comprises some solvent, or after a first drying step.

If the electrode slurry is identical to/is the coating slurry, this may provide a particularly simple production method.

Providing the electrode foil may comprise unwinding the electrode foil from a coil.

Then, applying the electrode slurry may be understood as a final production step and/or as a repairment step. The present method may also be understood as a method of repairing an electrode foil. The present method may be performed as a "stand-alone method", e.g. after an initial production method of a (faulty) electrode foil comprising imperfections.

Inspecting the electrode foil may comprise recording characteristics of the electrode foil (or at least from a region of interest of the electrode foil), e.g. using a sensor, and analyzing the characteristics (i.e. the potential imperfections), e.g. using a processing unit.

The complete electrode foil may be inspected or only a part of it, e.g. a region of interest. Said region of interest may be areas which have been identified in a prior scan (e.g. using a faster scanning method) or which are predetermined (e.g. areas which are known to be rather prawn to imperfections).

The characteristics e.g. may be visual characteristics. Analyzing the characteristics may comprise analyzing the imperfection.

Inspecting the electrode foil may comprise irradiating the electrode foil with Xray, laser light, beta rays and/or ultrasound. Inspecting the electrode foil may comprise recording absorption characteristics, e.g. of Xray, laser light, beta rays, and/or ultrasound.

The sensor e.g. may be a camera. The sensor e.g. may be a high speed vision control sensor. The sensor e.g. may be a sensor for receiving Xray. The sensor may be a sensor for receiving laser light. The sensor may be a sensor for receiving beta rays. The sensor may be a sensor for receiving ultrasound.

Also, a plurality of sensors may be used, e.g. each of which being configured to receive a respective kind of signal (e.g., one of Xray, laser light, beta rays, ultrasound), thereby complimenting each other and enabling a higher quality of electrode foil inspection.

Analyzing the characteristics/the imperfection may comprise at least one of: localizing the position of the imperfection on the electrode foil, determining the size and/or form of the imperfection, classifying an imperfection type comprising classifying whether the imperfection is reparable or irreparable.

E.g., an imperfection may be classified as being one of: A cavity, a crater, a hole, a groove.

E.g., a thickness of the coating may be known. Hence, the form (e.g., two-dimensional form in a projection) may allow to estimate/to determine the volume of the imperfection, which may indicate an appropriate amount of electrode slurry.

The characteristics/the imperfection may be analyzed in real time. Determining the size and/or form of the imperfection may be performed in real time. Classifying the imperfection may be performed in real time.

In some embodiments, applying the electrode slurry may be performed only upon classifying the imperfection as being reparable.

This may avoid applying electrode slurry onto imperfections that are not reparable. This may allow to use the electrode slurry particularly efficiently.

Applying the electrode slurry may comprise determining an amount of electrode slurry, e.g. as a function of the performed analysis of the characteristics/the imperfection. Applying the electrode slurry may comprise determining an application position on the electrode foil, where the slurry is to be applied, e.g. as a function of the performed analysis of the characteristics/the imperfection.

The amount of electrode slurry may be an amount appropriate for the imperfection.

Determining the amount of electrode slurry may be performed in real time.

The amount of electrode slurry may be determined in increments (i.e. in predefined units, e.g. according to a predefined weight or volume unit).

Applying the electrode slurry onto the electrode foil at the identified imperfection may comprise overfilling the imperfection. This may be advantageous, as during drying, a solvent may disappear from the electrode slurry, and the electrode slurry may shrink. Overfilling the imperfection may be performed as a function of the performed analysis of the characteristics/the imperfection. Determining an amount of electrode slurry may comprise determining an amount of electrode slurry that corresponds to an overfilling of the imperfection.

The method may further comprise, e.g. after applying the electrode slurry, drying the electrode foil.

The electrode foil e.g. may be dried by means of IR-drying, convection drying or induction drying. Induction drying may be preferred as it allows to perform selective drying of the electrode foil, e.g. only at positions where the electrode slurry was applied. This may also reduce the energy consumption of the method.

The method may further comprise, e.g. after applying the electrode slurry, re-inspecting the electrode foil. Re-inspecting the electrode foil may comprise classifying the electrode foil at the position of the imperfection.

Re-inspecting the electrode foil e.g. may be performed after drying the electrode foil. This may be beneficial, as drying the electrode foil may cause/may give rise to/may lead to imperfections.

Re-inspecting the electrode foil may determine whether the imperfection is remedied or not.

Re-inspecting the electrode foil may be performed in a similar way as the inspecting. Features disclosed with respect to inspecting the electrode foil may equally apply to the re-inspecting, unless otherwise stated. E.g., re-inspecting may comprise recording characteristics of the electrode foil, e.g. using a sensor, and e.g. analyzing the characteristics/the imperfection, e.g. using a processing unit. The characteristics may be visual characteristics. The characteristics may be absorption characteristics. Features disclosed with respect to an inspection unit may equally apply to the re-inspection unit, unless otherwise stated.

In some embodiments, only areas of the electrode foil that comprised imperfections before applying the electrode slurry may be re-inspected.

A re-inspection unit may be movable above/along the electrode foil, e.g. in the same way as the application unit may be movable.

The method may further comprise iteratively applying electrode slurry onto the electrode foil at the respective position of the imperfection, e.g. as a function of the performed re-inspection. Optionally, the electrode slurry may be iteratively applied until the electrode foil is characterized as being proper/being without an imperfection.

Iteratively applying the electrode slurry can comprise iteratively applying the same amount of electrode slurry.

Iteratively applying the electrode slurry may allow to apply an appropriate amount of electrode slurry without directly determining a required amount of electrode slurry.

E.g., a movement of the electrode foil may be stopped during iteratively applying electrode slurry onto the electrode foil.

The method may also comprise iteratively inspecting the electrode foil for imperfections of the coating, e.g. before/after each application of electrode slurry.

The method may also comprise iteratively re-inspecting the electrode foil for imperfections of the coating, e.g. after each application of electrode slurry.

Applying the electrode slurry and inspecting the electrode foil may be performed alternatively. The application unit may comprise the inspection unit and/or the re-inspection unit. The inspection unit may be movable in the same way as the application unit is movable. The inspection unit may comprise the re-inspection unit. The re-inspection unit may be movable in the same way as the application unit is movable.

At least one of inspecting the electrode foil, analyzing the characteristics/the imperfection, determining an amount of electrode slurry, and re-inspecting the electrode foil may be performed using an artificial intelligence (AI) algorithm. The artificial intelligence algorithm may have been pre-trained based on training data that comprise electrode foil data and/or imperfection data.

Inspecting the electrode foil by means of an artificial intelligence algorithm may allow to determine and/or to avoid patterns of imperfection that may arise during coating of the metal foil and/or during processing steps of the electrode foil (e.g., processing steps after coating the metal foil).

The method may comprise using an artificial intelligence algorithm for detecting patterns of imperfection of the production process of the electrode foil/of steps of the production process that may occur before inspecting the electrode foil.

The method may further comprise, e.g. after applying the amount of electrode slurry, calendering the electrode foil. The method may further comprise, e.g. after calendering the electrode foil, separating the electrode foil into electrode sheets. Separating the electrode foil into electrode sheets may also be performed after applying the electrode slurry and/or after drying the electrode foil and/or after re-inspecting the electrode foil.

The present disclosure also relates to a method of producing an energy storage device, such as a battery cell, the method comprising: producing an electrode foil by the method as described above.

The present disclosure also relates to an electrode foil produced by the method as described above.

The present disclosure also relates to an apparatus for producing an electrode foil. The apparatus comprises an inspection unit configured to inspect the electrode foil for imperfections. The apparatus comprises an application unit configured to apply an electrode slurry onto the electrode foil at an identified imperfection, upon identifying the imperfection. The apparatus optionally comprises a drying unit configured to dry the electrode foil after applying an amount of electrode slurry. Optionally, the apparatus may be configured to perform the method of producing an electrode foil as described above.

The application unit may comprise an application head, which may be configured to apply the amount of electrode slurry onto the electrode foil.

The apparatus may be configured to move the electrode foil through/along the application unit.

The apparatus may be configured to adjust a moving speed of the electrode foil along the application unit, e.g. based on the imperfection/based on properties of the imperfection. The apparatus may be configured to stop a movement of the electrode foil along the application unit, e.g. during application of the electrode slurry.

E.g., the moving speed of the electrode foil may be adjusted based on a size/volume/shape/form of the imperfection and/or based on a determined amount of electrode slurry. E.g., the larger the size/volume of an imperfection, the more the moving speed may be slowed down.

The application unit/application head may be movable in a moving direction of the electrode foil.

By moving the application unit/application head in or opposite to a moving direction of the electrode foil, it may be possible to adjust a moving speed of the electrode foil with respect to the application unit/application head, e.g. based on a size/volume/shape/form of the imperfection and/or based on a determined amount of electrode slurry.

By moving the application unit/application head in a moving direction of the electrode foil, it may be possible to continue processing the electrode foil while applying the electrode slurry.

By moving the application unit/application head in a moving direction of the electrode foil, it may be possible to vary a speed of the imperfection while applying the electrode slurry.

The application unit/application head may be movable in a direction orthogonal to a moving direction of the electrode foil.

The application unit/application head may be variably movable above the surface of the electrode foil.

E.g., the moving speed of the electrode foil may be adjusted. The electrode foil may be adjusted/slowed during application of the electrode slurry.

The application unit/application head may be configured to apply the electrode slurry by means of spray coating. The application unit/application head may be configured to apply the electrode slurry by means of printing. The application unit/application head may be configured to apply the electrode slurry by means of stripping. The application unit/application head may comprise a nozzle and may be configured to apply the electrode slurry by means of the nozzle.

The application unit may comprise a smoothing device, e.g. a doctor blade, for smoothing the electrode slurry after applying it. The application unit may comprise a suction unit, e.g. for sucking electrode slurry in that remains after smoothing.

The apparatus may comprise a slurry reservoir, e.g. a slurry tank. The slurry reservoir may be configured to supply electrode slurry to the application unit.

The inspection unit may comprise a sensor. The sensor may be a camera. The sensor may be a high speed vision control sensor. The sensor may be a sensor for receiving Xray. The sensor may be a sensor for receiving laser light. The sensor may be a sensor for receiving beta rays. The sensor may be a sensor for receiving ultrasound. The inspection unit may comprise a plurality of sensors.

The inspection unit may comprise a processing unit which may be configured to analyze characteristics of the electrode foil, e.g. recorded by the sensor.

The inspection unit may be configured to re-inspect the electrode foil.

The application unit may also comprise the inspection unit. Inspecting the electrode foil and applying the electrode slurry may be performed synonymously, or alternatively.

The application unit may also comprise the re-inspection unit. Re-inspecting the electrode foil and applying the electrode slurry may be performed synonymously, or alternatively.

The inspection unit may be movable with respect to the electrode foil in the same way as the application unit may be movable with respect to the electrode foil.

The apparatus may be configured to provide the electrode foil, after applying the electrode slurry thereto, to the inspection unit. E.g., after producing/repairing the electrode foil, it may be possible move the electrode foil in a backwards direction through the inspection unit.

The apparatus may comprise a second inspection unit/a re-inspection unit configured to re-inspect the electrode foil for imperfections, e.g. after applying the electrode slurry thereto.

The re-inspection unit may be configured in the same way as the inspection unit. E.g., the re-inspection unit may comprise a sensor or a plurality of sensors.

The drying unit may be an IR-drying unit, a convection drying unit or an induction drying unit. The IR-drying unit may be preferred as it allows to perform selective drying of the electrode foil, e.g. only where electrode slurry was applied. This may also reduce the energy consumption of the apparatus.

The apparatus may also be configured to provide the metal foil and to coat the metal foil by applying a coating slurry. The apparatus may also be a "stand-alone apparatus" that may implement a final production step / a repairment step.

All technical implementation details and advantages described with respect to the method of the present disclosure are self-evidently mutatis mutandis applicable for the apparatus of the present disclosure and vice versa.

The technology provided by the present disclosure may be applied in various types of batteries such as lithium-ion secondary batteries. Other compatible examples of batteries may be sodium-ion batteries, potassium-ion batteries, magnesium-ion batteries, calcium-ion batteries or aluminum-ion batteries. The technology provided by the present disclosure may also be applied in various types of metal ion capacitors, such as lithium-ion capacitors.

It is intended that combinations of the above-described elements and those within the specification may be made, except where otherwise contradictory.

It is to be understood that both the foregoing general description and the following detailed description are exemplary and explanatory only, are provided for illustration purposes and are not restrictive of the disclosure, as claimed.

The accompanying drawings, which are incorporated in and constitute a part of this specification, illustrate examples of the disclosure and together with the description, and serve to support and illustrate the principles thereof.

### BRIEF DESCRIPTION OF THE DRAWINGS

Fig. 1 schematically shows an explosion view of a section of a battery 100 according to an example.
Fig. 2 shows a flowchart of a method 200 of producing an electrode foil for an energy storage device according to examples of the present disclosure.
Fig. 3 shows an exemplary apparatus 300 for producing an electrode foil for an energy storage device according to examples of the present disclosure.
Fig. 4 shows an example of an electrode foil 420 that may be repaired by a method according to examples of the present disclosure.
Fig. 5 shows an exemplary application unit 530 that may be used in a method according to embodiments of the present disclosure.

### DESCRIPTION OF THE DRAWINGS

Reference will now be made in detail to examples of the disclosure, examples of which are illustrated in the accompanying drawings. Wherever possible, the same reference numbers will be used throughout the drawings to refer to the same or like parts.

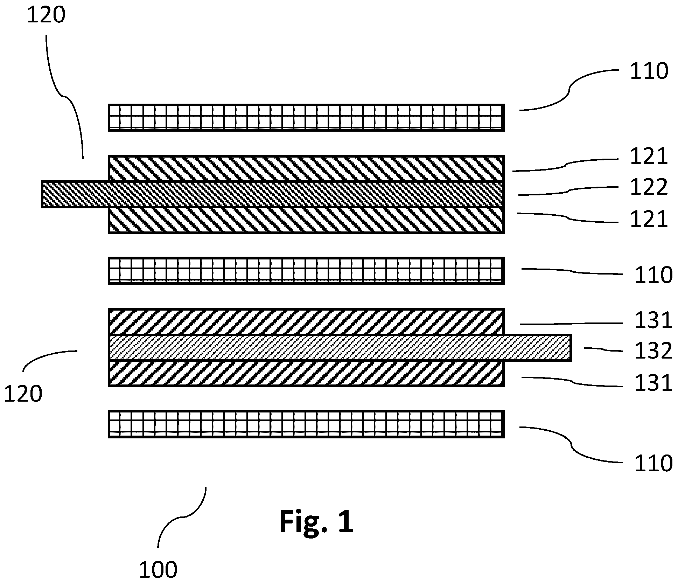

Fig. 1 schematically shows an explosion view of a section of a battery 100. The battery 100 comprises several layers of separator foil 110, a first electrode 120 and a second electrode 130. The first electrode 120 comprises a metal foil 122 and a coating 121 on either side of the metal foil 122. The second electrode 130 comprises a metal foil 132 and a coating 131 on either side of the metal foil 132.

The coatings 121 and 131 comprise respective active materials. During production of a respective electrode foil, the coatings 121 and 131 can be coated onto the metal foil by applying a corresponding coating slurry, comprising the active material and optionally comprising at least one of a binding material, a conductive material and a solvent. The coating thickness/the amount of coating on the electrode foils needs to be applied with a certain accuracy, as the amount of ions provided by the cathode needs to be fully received by the anode.

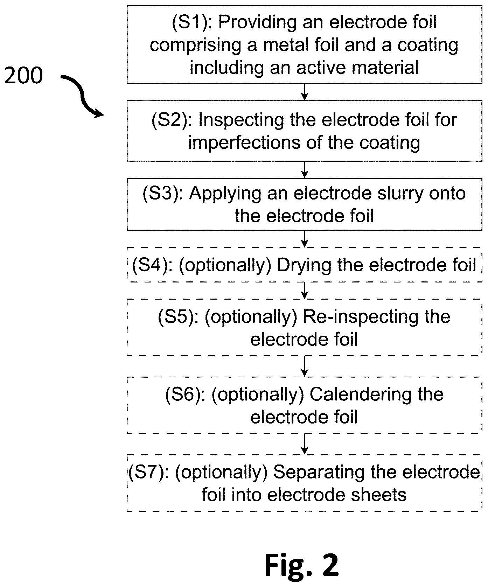

Fig. 2 shows a flowchart of a method 200 of producing an electrode foil for an energy storage device according to examples of the present disclosure.

In step S1, the electrode foil is provided. The electrode foil comprises a metal foil and a coating including an active material.

The electrode foil may be provided by providing the metal foil and coating the metal foil by applying a coating slurry onto the metal foil. The electrode foil may be provided by unwinding the electrode foil from a coil.

In step S2, the electrode foil is inspected for imperfections of the coating.

Inspecting the electrode foil may comprise recording characteristics of the electrode foil using a sensor. Inspecting the electrode foil may comprise analyzing the characteristics/the imperfection, e.g. using a processing unit. Analyzing the characteristics/the imperfection may comprise localizing the position of the imperfection. Analyzing the characteristics/the imperfection may comprise determining the size and/or form of the imperfection. Analyzing the characteristics/the imperfection may comprise classifying an imperfection type.

In step S3, upon identifying an imperfection (e.g. in step S2), an electrode slurry is applied onto the electrode foil at the identified imperfection.

The electrode slurry may be applied by means of spray coating, stripping, printing, and/or by means of a nozzle.

In optional step S4, the electrode foil may be dried.

In optional step S5, the electrode foil may be re-inspected.

In optional step S6, the electrode foil may be calendered.

In optional step S7, the electrode foil may be separated into electrode sheets.

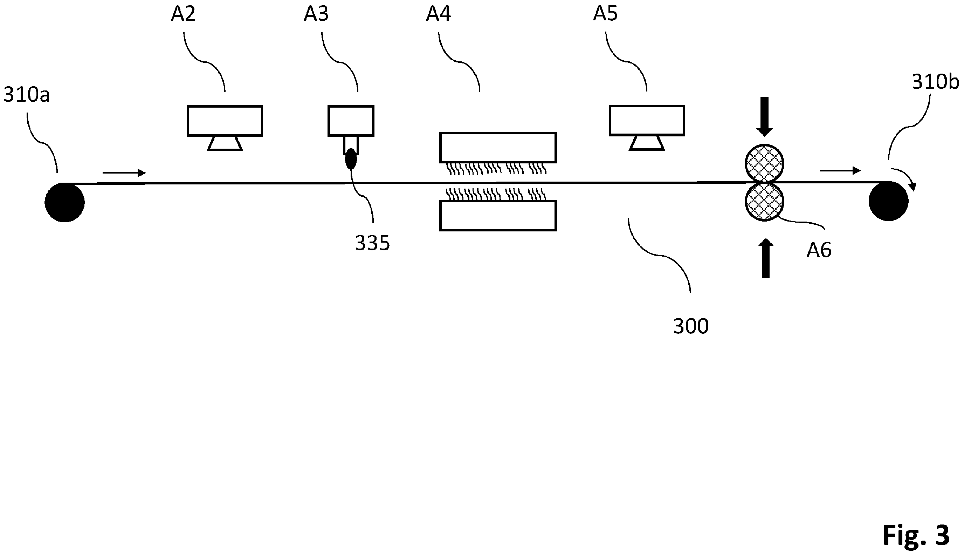

Fig. 3 shows an exemplary apparatus 300 for producing an electrode foil for an energy storage device according to examples of the present disclosure.

The apparatus 300 comprises an inspection unit A2 configured to inspect the electrode foil for imperfections.

The inspection unit A2 may comprise a sensor, which may be configured to record characteristics of the electrode foil. The sensor may be a camera. The sensor may be a high speed vision control sensor. The sensor may be a sensor for receiving Xray. The sensor may be a sensor for receiving laser light. The sensor may be a sensor for receiving beta rays. The sensor may be a sensor for receiving ultrasound. The inspection unit may comprise a plurality of sensors.

The inspection unit A2 may comprise a processing unit which may be configured to analyze characteristics of the electrode foil, e.g. recorded by the sensor.

The apparatus 300 comprises an application unit A3 configured to apply, upon identifying the imperfection (e.g., by the inspection unit A2), an electrode slurry 335 onto the electrode foil at an identified imperfection.

The application unit A3 may comprise a nozzle.

The apparatus 300 may optionally comprise a drying unit A4 configured to dry the electrode foil after applying the amount of electrode slurry.

The apparatus 300 may optionally comprise a re-inspection unit A5 configured to re-inspect the electrode foil.

The apparatus 300 may optionally comprise a calendering unit A6 configured to calender (optional step S6) the electrode foil. Said calendering unit may be used to smooth the electrode foil, in particular its coating at the region where the additional slurry has been added (cf. step S3) and thus prepare it for a subsequent calendering process that may follow.

The apparatus 300 may comprise a coil 310a from which the electrode foil may be provided (step S1) by unwinding the electrode foil.

The apparatus 300 may comprise a coil 310b onto which the electrode foil may be rolled upon, after the electrode slurry was applied in step S3.

The apparatus 300 may optionally comprise a separation unit (not shown) configured to separate the electrode foil into electrode sheets (optional step S7).

Optionally, the apparatus 300 may be configured to perform the method according to the present disclosure.

The arrows in Fig. 3 indicate a moving direction of the electrode foil, e.g. along the application unit A3.

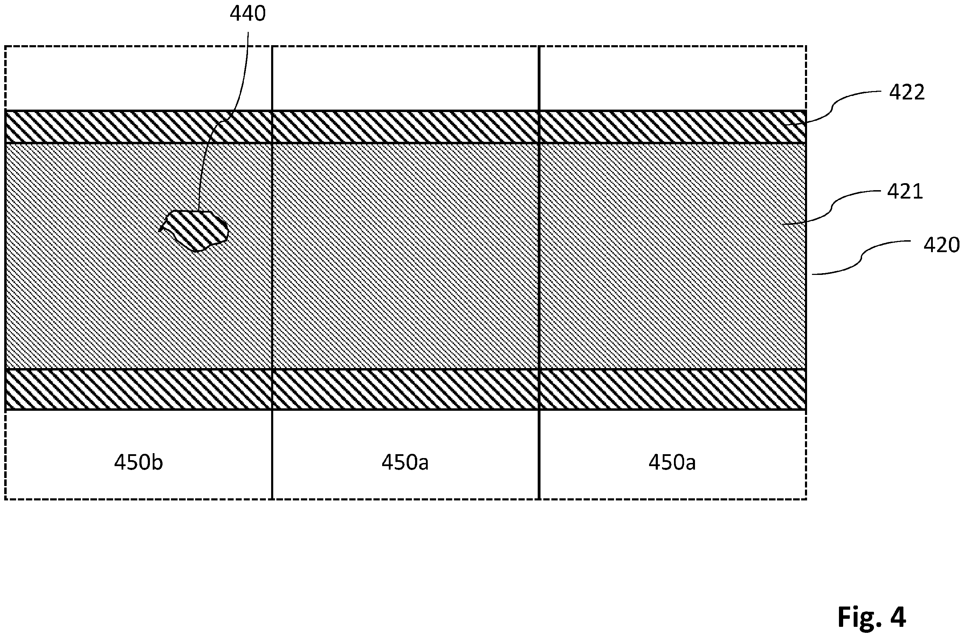

Fig. 4 shows an example of an electrode foil 420 that may be repaired by a method according to examples of the present disclosure.

The electrode foil 420 comprises a metal foil 422 and a coating 421.

The coating 421 comprises an imperfection 440. The dotted/solid lines indicate possible sheets 450a, 450b of electrode foil (which is separated into sheets later on). Without the method of the present disclosure, electrode sheet 450b would comprise the imperfection 440 and would need to be sorted out. Using the method of the present disclosure, the imperfection 440 can be remedied, and also the electrode sheet 450b, after applying the electrode slurry, and thus comprising no imperfection anymore, can be used and does not need to be sorted out.

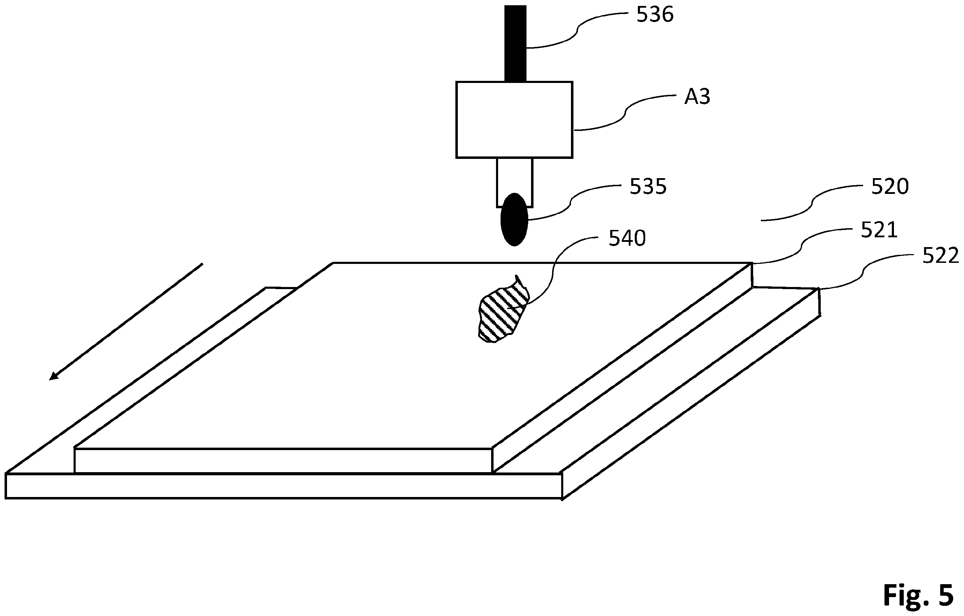

Fig. 5 shows an exemplary application unit A3 that may be used in a method according to embodiments of the present disclosure.

An application unit A3, which may be/may comprise an application head, applies an electrode slurry 535 onto an electrode foil 520, which comprises a metal foil 522 and a coating 521. The electrode slurry is applied at an imperfection 540 of the coating. The application unit A3 comprises an electrode slurry supply 536, which may be connect to a reservoir (not shown). The electrode foil 520 may be moved along the application unit A3 in a moving direction, which is indicated by the arrow. The application unit A3 may be variably movable along/above the electrode foil 520.

Throughout the description, including the claims, the term "comprising a" should be understood as being synonymous with "comprising at least one" unless otherwise stated. In addition, any range set forth in the description, including the claims should be understood as including its end value(s) unless otherwise stated. Specific values for described elements should be understood to be within accepted manufacturing or industry tolerances known to one of skill in the art, and any use of the terms "substantially" and/or "approximately" and/or "generally" should be understood to mean falling within such accepted tolerances.

Although the present disclosure herein has been described with reference to particular examples, it is to be understood that these examples are merely illustrative of the principles and applications of the present disclosure.

It is intended that the specification and examples be considered as exemplary only, with a true scope of the disclosure being indicated by the following claims.

## Claims

1. A method of producing an electrode foil for an energy storage device, the method comprising:
providing (S1) the electrode foil comprising a metal foil and a coating including an active material,
inspecting (S2) the electrode foil for imperfections of the coating, and
upon identifying an imperfection, applying (S3) an electrode slurry onto the electrode foil at the identified imperfection.

2. The method according to claim 1,
wherein the electrode slurry comprises the active material, and
the electrode slurry optionally further comprises at least one of a binding material, a conducting material, and a solvent.

3. The method according to claim 2,
wherein providing (S1) the electrode foil comprises providing the metal foil and coating the metal foil by applying a coating slurry, optionally being the electrode slurry, onto the metal foil, or
wherein providing (S1) the electrode foil comprises unwinding the electrode foil from a coil.

4. The method according to any one of the preceding claims, wherein inspecting (S2) the electrode foil comprises recording (S2a) characteristics of the electrode foil using a sensor and analyzing (S2b) the characteristics using a processing unit.

5. The method according to any one of the preceding claims, wherein analyzing the characteristics comprises at least one of:
localizing the position of the imperfection on the electrode foil,
determining the size and/or form of the imperfection,
classifying an imperfection type comprising classifying whether the imperfection is reparable or irreparable.

6. The method according to the preceding claim, wherein
applying (S3) the electrode slurry is only performed upon classifying the imperfection as being reparable.

7. The method according to any one of the preceding claims, wherein applying (S3) the electrode slurry comprises:
determining (S3a) an amount of electrode slurry as a function of the performed analysis (S2a) of the characteristics, and/or
determining an application position on the electrode foil, where the slurry is to be applied, as a function of the performed analysis (S2a) of the characteristics.

8. The method according to any one of the preceding claims, further comprising, after applying (S3) the electrode slurry, drying (S4) the electrode foil.

9. The method according to any one of the preceding claims, further comprising, after applying (S3) the electrode slurry, re-inspecting (S5) the electrode foil, wherein re-inspecting (S5) the electrode foil comprises classifying the electrode foil at the position of the imperfection.

10. The method according to claim 9, wherein the method further comprises iteratively applying (S3) electrode slurry onto the electrode foil at the respective position of the imperfection as a function of the performed re-inspection (S5), optionally until the electrode foil is characterized as being proper.

11. The method according to any one of the preceding claims, wherein at least one of inspecting (S2) the electrode foil, analyzing (S2a) the characteristics, determining (S3a) an amount of electrode slurry, and re-inspecting (S5) the electrode foil is performed using an artificial intelligence (AI) algorithm, the artificial intelligence algorithm being pre-trained based on training data that comprise electrode foil data and/or imperfection data.

12. The method according to any one of the preceding claims, wherein the method further comprises, after applying (S3) the amount of electrode slurry, calendering (S5) the electrode foil, and afterwards separating (S7) the electrode foil into electrode sheets.

13. A method of producing an energy storage device, such as a battery cell, the method comprising: producing an electrode foil by the method according to any one of the preceding claims.

14. An electrode foil produced by the method according to any one of claims 1 to 12.

15. An apparatus for producing an electrode foil, the apparatus comprising:
an inspection unit (A2) configured to inspect (S2) the electrode foil for imperfections,
an application unit (A3) configured to apply (S3) an electrode slurry onto the electrode foil at an identified imperfection, upon identifying the imperfection,
and
optionally a drying unit (A4) configured to dry (S4) the electrode foil after applying an amount of electrode slurry,
wherein optionally, the apparatus is configured to perform a method according to any one of claims 1 to 12.
